# EUROPEAN PATENT SPECIFICATION

(11) **EP 2 852 775 B1**
(45) Date of publication and mention of the grant of the patent: **04.05.2016**
(21) Application number: 13731953.9
(22) Date of filing: 17.05.2013
(51) Int. Cl.: F16F 7/06, D06F 37/20

(54) **ROTARY DAMPING DEVICE FOR ELECTRICAL HOUSEHOLD APPLIANCE**
ROTIERENDE DÄMPFUNGSVORRICHTUNG FÜR ELEKTRISCHES HAUSHALTSGERÄT
DISPOSITIF D'AMORTISSEMENT ROTATIF POUR APPAREIL ÉLECTROMÉNAGER

(30) Priority: 23.05.2012 ES 201230774
(43) Date of publication of application: 01.04.2015
(73) Proprietor: BSH Hausgeräte GmbH, 81739 München (DE)
(72) Inventor: GRACIA BOBED, Ismael, E-50194 Zaragoza (ES); GRACIA CANO, Eduardo, E-50003 Zaragoza (ES); MARTINEZ PEREZ, Gerardo, E-50015 Zaragoza (ES); RECIO FERRER, Eduardo, E-50013 Zaragoza (ES)
(86) International application number: PCT/IB2013/054052
(87) International publication number: WO 2013/175372

(56) References cited:
- AT-B- 218 995
- ES-A1- 2 372 835
- US-A- 3 197 983

## Description

The invention relates to the technical field of damping devices from the oscillating unit of household appliances or electrical household appliances, such as washing machines or dryers. In these electrical household appliances, the oscillating unit comprises a wash tub, a drum inside same rotating by the action of a motor. The tub is attached to the frame of the electrical household appliance by means of at least one damping device to damp the vibrations or noises caused by the rotation of the drum inside the tub during the operation of the electrical household appliance.

Axial damping devices (also referred to as linear damping devices) for electrical household appliances, such as washing machines or dryers, are well known. An axial damping device comprises two support arms connected to each other with freedom of axial displacement. The axial damping device is arranged within the electrical household appliance with the support arms respectively articulated to the frame (frame articulation), and to the oscillating unit, specifically to the tub (oscillating unit articulation) of the electrical household appliance. The connection between the support arms with the freedom of axial displacement incorporates an axial damper that generates an axial damping force through the axial displacement of the support arms transmitted through the movement of the oscillating unit during the operation of the electrical household appliance. Conventionally, these damping devices incorporate an axial friction damper.

The present invention relates to a rotary damping device (also referred to as a "radial damping device") that, in contrast to axial damping devices, comprises a lever arm and a support arm articulated between each other (intermediate articulation). The rotary damping device is arranged within the household electrical appliance with the lever arm articulated to the frame (frame articulation) and the support arm articulated to the oscillating unit (oscillating unit articulation). At least one of the three articulations of the rotary damping device (frame, intermediate, or oscillating unit) incorporates a rotational damper in which a damping moment is generated by the rotation of the lever arm or the support arm in the corresponding articulations transmitted by the movement of the oscillating unit during the operation of the household electrical appliance. Preferably, these rotary damping devices incorporate a rotational friction damper. These damping devices are described, for example, in the publication WO 2011/070092 A1. In contrast to axial damping devices, in rotary damping devices the damping is exerted through a damping moment generated in the corresponding articulation, in particular a friction moment, such that the damping force, in particular the frictional force, is advantageously transmitted to the fastening without having a direct impact on same, in particular permits an advantageous reduction in the local flexion forces on the fastening and/or the frame and/or the housing of the household electrical appliance.

On the other hand, damping devices with variable damping are known. These damping devices controllably provide a variable damping coefficient. For the purposes of the present specification, the damping coefficient (K) is defined as the absolute value of the ratio of the damping force or moment and axial or rotational velocity (mean values) for one cycle of axial or rotational oscillating displacement, respectively, for an axial or rotary damping device; in particular, for a fixed axial displacement amplitude or a fixed rotation angle, and for one deflection of the fixed damping device about which said axial or rotational oscillating displacement takes place, respectively, for an axial or rotary damping device.

Concerning axial damping devices for electrical household appliances, and among the damping devices with variable damping, free stroke damping devices are known such as those in the publication EP 1 754 908 A2. In these free-stroke axial damping devices, the connection with freedom of axial displacement offers an axial displacement stroke (free stroke) within which the relative axial displacement between the support arms generates no damping force, in particular frictional damping. Normally, the free stroke in conventional damping devices for electrical household appliances has an amplitude of approximately 5 mm to 8 mm. In this manner, selective damping is provided when the amplitude of the axial displacement stroke exceeds the amplitude of the free stroke that follows when the amplitude of the oscillating unit oscillations is sufficiently large, especially in an environment in which a mode of operation corresponds to a resonance frequency of the oscillating unit, in particular in an operational phase of the electrical household appliance in which the drum rotation is accelerating or decelerating, normally in a rotational speed range of approximately 0 rpm to 300 rpm. When the operation of the electrical household appliance reaches a defined mode, the amplitude of the oscillating unit oscillations are kept low such that the axial displacement between the support arms remains within the free stroke without therefore exerting damping force, in particular frictional force. In this manner, the damping force transmitted to the frame of the electrical household appliance, as well as the vibrations and consequently the noise, are reduced or eliminated during the operations of the electrical household appliance in said defined mode. Nevertheless, these axial damping devices with free stroke have the disadvantage that their axial length is relatively large.

Likewise known are damping devices with actively variable damping. These damping devices comprise active means to regulate the damping coefficient during operation. Active means comprise an actuator that, based on an operational condition detected by a control unit, for example, the rotational speed of the drum, or the laundry load and/or wash water in the tub, acts on the damper or damping device to vary its damping coefficient. For example, the publication DE 10 2004 047 999 A1 describes an axial friction damping device with actively variable damping for the oscillating unit of the electrical household appliance. This damping device comprises an actuator that exerts variable pressure on a friction element in a controlled manner, which varies the damping coefficient of the damping device. Other damping devices are also known in which the variation in the damping coefficient is obtained by acting on the viscosity of a fluid in a damper through magneto-rheological means. Compared with the free stroke damping devices, these devices can provide an optimized damping force based on a defined operational condition of the electrical household appliance, such as an operational condition of washing with a low rotational speed and an operational condition of spinning with a high rotational speed. Additionally, these devices offer the advantage of providing a continuously variable damping coefficient during the entire operation of the electrical household appliance, in particular based on the drum rotation and the load in the tube of the oscillating unit. Moreover, control over varying the damping coefficient can be achieved rapidly and precisely with electronic means. Nevertheless, these devices have the disadvantages of complexity, and consequently low reliability, as well as higher costs of manufacture and maintenance.

In view of the foregoing, it would be desirable to have a damping device with variable damping in the oscillating unit of electrical household appliances such as washing machines or dryers that will satisfy various operational conditions, be simple to manufacture and operate, have high reliability, and have reduced manufacturing and maintenance costs.

With the object of solving especially the indicated technical problem and to achieve improvements in the electrical household appliances and in the damping devices, in particular concerning the damping devices of the oscillating unit in electrical household appliances known in the state of the art, the proposed invention provides the characteristics and technical effects described below.

The present invention relates to a rotary damping device that is suitable for an electrical household appliance, such as a washing machine or dryer, and addresses both the damping device and the essential parts of same as well as electrical household appliances in which the damping device can preferably, although not exclusively, be applied. For the purposes of the present specification, the term "frame" generally means a part of the electrical household appliance that remains substantially fixed with respect to the oscillations of the oscillating unit, in particular the tub, during the operation of the electrical household appliance. In particular, the term "frame" includes the concept of "housing" of the electrical household appliance.

According to the invention the rotary damping device comprises a lever arm articulated about a principal articulation axis of the frame and a support arm articulated about a principal articulation axis of the oscillating unit, the lever arm and the support arm being articulated to each other about a principal intermediate articulation axis. For the purposes of the present specification, the term "axis" includes the concept of an imaginary straight line.

The rotary damping device according to the present invention comprises an arm (lever or support, hereinafter "arm") articulated about a principal articulation axis (intermediate, of the frame, or of the oscillating unit, hereinafter "principal articulation axis"), optionally through at least one principal rotational damper. The rotary damping device comprises at least one secondary body articulated about a secondary articulation axis (hereinafter "secondary articulation axis"), through a secondary rotational damper. In addition, the at least one secondary body is mechanically coupled with the arm by means of a mechanical coupling. The secondary articulation axis can be the same as the principal articulation axis, which is then called "articulation axis (intermediate, of the frame, or of the oscillating unit)".

The principal and/or secondary rotational damper can be a rotational friction damper. A rotational friction damper can be obtained, for example, through incorporation of a frictional layer or friction element, respectively, fixed to the arm or the secondary body, and functionally connected to a fixing element for generating friction by rotation of the frictional layer or friction element with respect to the fixing element. A selected tightening of the frictional layer or the friction element against the fixing element provides a rotational friction damper with a required damping coefficient (coefficient of friction). The fixing element can be, in particular, a fixing sleeve. The frictional layer can be obtained through a suitable covering applied to the frictional surface of the secondary body or the arm. The friction element can have any suitable shape, for example, it can be constituted as a friction sleeve, a friction ring, and/or a friction ribbon. The material employed for the friction element can be foamed plastic, for example, polystyrene or nylon, and especially suitable are the materials used in conventional axial friction dampers. The term "friction element" includes the concept of "friction sponge". Additionally, the friction element can be auto-lubricating, for example, by grease, oil, or the like. Construction of a friction damper, axial or rotational, starts in particular from a friction element with distinct shapes and materials that are known to experts in the materials field. For the purposes of the present specification, the term "fixed" includes the concepts of "joined" and "integrated".

With this configuration according to the present invention, a damping device with selectable damping can be obtained easily by adding, replacing or removing from the damping device at least one secondary body with a defined damping coefficient, in particular of friction, connected, in particular mechanically, to the arm of the rotary damping device.

The invention provides that the mechanical coupling between the secondary body and the arm is a mechanical pulling coupling that is a mechanical coupling that provides pulling in rotation discontinuously of the secondary body about its secondary articulation axis by the rotation of the arm about the principal articulation axis.

With the goal of clarifying the description of the invention, the term "arm angle (α)" is introduced, in particular the lever arm angle or the support arm angle, which in this context is defined as the angle swept by the arm (lever or support) about the principal articulation axis in one oscillating rotation cycle during the operation of the rotary damping device. Likewise introduced is the term "secondary body angle ((β)", which in this context is defined as the portion of the arm angle (α) within which the secondary body rotates about the secondary articulation axis as a result of the rotation of the arm about the principal articulation axis, in particular when the secondary body is pulled in rotation. In effect, the specific case in which both the arm angle (α) and the secondary body angle (β) equal the rotation of the secondary body, in particular the pulling in rotation of the secondary body, which is produced continuously within the entire arm angle (α).

Optionally, the arm of the device can be articulated with respect to the principal articulation axis through at least one principal rotational damper, in particular a principal rotational friction damper. Otherwise, that is in the case in which the principal body of the device is articulated with respect to the principal articulation axis without the intermediacy of any principal rotational damper, a free stroke rotary damping device is obtained in which the damping produced as a consequence of the rotation, in particular of the pulling rotation, of the secondary bodies when the arm angle (α) exceeds a defined value. Rotational friction damping devices known in the state of the art have the disadvantage that they act continuously, which can cause more wear of the friction damper. Therefore, this configuration of the damping device according to the present invention can advantageously provide in particular less wear of the rotational friction damper, and consequently greater durability of the rotary damping device.

Apart from the advantages associated with the rotary damping devices expressed above, the present invention provides a damping device with damping that varies automatically based on the arm angle (α), considering that the arm angle (α) will vary along the operation of the electrical household appliance. Thus, in particular, in one operational phase of the electrical household appliance at low drum rotation speeds, in which the amplitude of the oscillating unit oscillations is greater, a larger damping coefficient can be provided than in a an operational phase with higher rotation speeds, in which the amplitude of the oscillating unit movement oscillations is reduced. Moreover, the invention provides a damping device with damping that varies automatically in stages through incorporation of a plurality of secondary bodies with distinct secondary body angles (β) mechanically coupled to the arm. In this manner, the damping device of the present invention allows passive adjustment of the damping coefficient, that is without the necessity of supplementary electronic means. Another additional advantage of the damping device of the present invention is that it permits modular design or construction with respect to the secondary body(or bodies), based on the damping coefficient required in distinct operational phases of the electrical household appliance.

The mechanical coupling of the damping device preferably comprises at least one mechanical pulling connection between the arm and a secondary body or between the secondary bodies. Each mechanical pulling connection has a secondary body that is pushed (or pulled) by the rotation of the arm, this secondary body being referred to in this context as a "secondary pushed body". On the other hand, in the case in which the pulling connection is arranged between the secondary bodies, there is also a secondary body that pushes (or pulls) by the rotation of the arm, which is referred to in this context as a "secondary pusher body". According to these definitions, a same secondary body can achieve the secondary pushed body function through one mechanical pulling connection, and that of the secondary pusher body through another mechanical pulling connection. In this manner, the mechanical pulling connection is configured so as to permit the pulling in rotation of the secondary pushed body about the secondary articulation axis by the rotation of the arm about the principal articulation axis, either directly or through the intermediacy of a secondary pusher body.

In a preferred embodiment, the mechanical pulling connection comprises at least one pusher element fixed to the arm or to the secondary pushing body, and at least one stop element fixed to the secondary pushed body. The pusher element(s) and the stop element(s) are arranged such that by rotating the arm or the secondary pushing body with respect to the secondary pushed body, the pusher element(s) is/are movable with respect to the stop element(s) within the mechanical connection angle (δ), the pusher element(s) interfering with the stop element(s) at the extremes of the mechanical connection angle (δ). That is, the mechanical connection angle (δ) is defined in this context as the angle swept by the pusher element(s) with respect to the stop element(s) without producing interference between said elements. The interference between the pusher element(s) with the stop element(s) is produced starting at the instant in which the rotation of the arm or of the secondary pushing body induces rotation of the secondary pushed body. The interference can take place, for example, through contact between the respective interference surfaces of the pusher element(s) and the stop element(s). Interference can also take place, for example, through deformation of an elastic element, in particular by compression of an elastic element. Said elastic elements can be fixed to a pusher element, a stop element, be constituted as an intermediary element independent of the mechanical pulling connection, or a combination of the foregoing. It is also envisioned that these pusher elements and stop elements can be elastic. The incorporation of an elastic element advantageously provides a "silent block" or damping function between the pusher elements and stop elements during operation.

The pusher elements and stop elements from the mechanical pulling connection can each be constituted with a flange or a recess, or a plurality of flanges or a recesses, in functional correspondence between the pusher elements and stop elements. The term "flange" in this context has a meaning that includes the concepts of "prominence", "protuberance", "prong", or "projection". Additionally, the term "recess" in this context has a meaning that includes the concepts of "cavity", "orifice", "channel", or "groove". For example, the mechanical pulling connection can comprise at least one tab stop (formed by two flanges) fixed to the arm or to a secondary body in functional correspondence with a flange fixed to another secondary body or arm, which is movable within the tab (that is, between the two flanges of the tab). Alternatively, for example, the mechanical pulling connection can comprise a plurality of engaged pulling flanges in correspondence with a plurality of recess stops.

According to the present invention, the selection of a mechanical connection angle (δ) for each one of the mechanical pulling connections that the damping device is comprises determines for each secondary pushed body a secondary body angle (β) for each one of both directions of rotation for an arm angle (α). Thus, in particular, in a substantially stationary functioning system of the damping device in which the arm angle (α) is maintained essentially constant, the secondary body angle (β) for each direction of rotation of the arm is likewise maintained constant and equal for both directions of arm rotation.

In the case in which the principal articulation axis and the secondary articulation axis coincide in the same articulation axis, the present invention anticipates that the arm and the secondary body (or bodies) can be arranged coaxially with respect to each other, in particular the secondary body (or bodies) about the arm, such that the rotational damper is situated between the arm and the secondary body (or bodies) or between the secondary bodies. Preferably, the arm and the secondary body (or bodies) are arranged side by side with respect to each other in the same articulation axis.

In a preferred embodiment, in the case where the principal articulation axis and the secondary articulation axis coincide in the same articulation axis and the arm and the secondary body (or bodies) are arranged side by side with respect to each other in the same articulation axis, the mechanical connection angles (δ) of the respective mechanical pulling connections of the device are preferably distinct. Alternatively or complementarily, the mechanical connection angles (δ) of the respective mechanical pulling connections of the device situated on one side or on both sides of the arm can be larger as the distance from the mechanical pulling connection to the arm becomes larger. In this manner, a damping device is provided with a damping coefficient that varies in stages as a function of the arm angle (α), with an additional stage for each mechanical pulling connection with a distinct mechanical connection angle (δ). In particular, in this manner a damping device is provided with a greater damping coefficient in an operational phase at low rotational speeds than in an operational phase at high rotational speeds of the drum in the electrical household appliance in which the oscillations or movements of the oscillating unit are less.

Advantageously, it is possible to obtain an embodiment of the damping device according to the invention that is simple and with reduced costs, in which the device comprises exactly one or two secondary bodies, in particular exactly two secondary bodies each one of which is arranged on each side of the arm.

On the other hand, the present invention anticipates the incorporation of an anti-roll element from the arm to prevent the arm from moving or deforming significantly in a direction substantially parallel to the principal articulation axis. This anti-roll element can comprise a limiting surface of the arm to limit or restrain said movement or deformation of the arm through contact with the limiting surface. Analogously, the present invention anticipates the incorporation of an anti-roll element from the secondary body (or bodies) to prevent the secondary body from moving or deforming significantly in a direction substantially parallel to the secondary articulation axis, in particular with a limiting surface of the secondary body to limit or restrain said movement or deformation of the secondary body through contact with the limiting surface. Additionally, in the case in which the principal and secondary articulation axes coincide in the same articulation axis and the arm and the secondary body (or bodies) are arranged side by side with respect to each other in the same articulation axis, the damping device can incorporate an anti-roll element from the secondary body (or bodies) to prevent the arm from moving or deforming significantly in a direction substantially parallel to the principal articulation axis, in particular with a limiting surface of the secondary body to limit or restrain said movement or deformation of the arm through contact with the limiting surface.

Complementarily, the invention contemplates the incorporation of an element for the retention of the friction element from the arm and/or secondary body. In particular, the damping device can comprise a principal body with an element for the retention of the friction element from the arm and/or secondary body with an element for the retention of the friction element from the secondary body. The retention element can comprise a retention surface of the arm or of the secondary body, respectively, to prevent the friction element from being displaced outside the rotational damper in a direction substantially parallel to the direction of the principal or secondary articulation axis, respectively.

Additionally, in the case in which the principal and secondary articulation axes coincide in the same articulation axis and the arm and the secondary body (or bodies) are arranged side by side with respect to each other in the same articulation axis, the damping device can incorporate an element for the retention of the friction element from the rotational damper of the adjacent secondary body or the adjacent arm.

The present invention is also aimed at a damping device from the oscillating unit of the electrical household appliance in which the arm is configured to be coupleable, in particular mechanically, to at least one secondary body such as has been described above, that is in which the secondary body (or bodies) is/are not necessarily incorporated. Additionally, the present invention is aimed at a secondary body for a damping device, characterized in that it is configured to be coupleable, in particular mechanically, to the arm of a damping device according to the present invention. In this sense, one of the advantages of the damping device of the present invention is that it permits modular design or construction with respect to the secondary body (or bodies), based on the damping coefficient required in distinct operational phases of the electrical household appliance. Finally, the present invention is also aimed at a electrical household appliance, especially a washing machine or a dryer, that comprises a frame to which is coupled an oscillating unit, in particular a tub, by means of at least one damping device where at least one of the damping devices is a rotary damping device as defined above in which the principal articulation axis of the frame and the principal articulation axis of the oscillating unit are fixed to the frame and the oscillating unit, respectively. The electrical household appliance can comprise a fixing articulation (intermediate, of the frame, or of the oscillating unit), with a fixing element (intermediate, of the frame, or of the oscillating unit), in particular a fixing sleeve. For fixing the fixing element, two fixing tabs and a fixing bolt can be employed, passing through the fixing sleeve and provided with a tightening means such as a nut. The fixing articulation for the frame can be fixed to the frame, in particular fixed to a lateral housing by a fixing stiffening means, such as a stiffener or a cross-bar fixed to the lateral housing so as to distribute the local forces transmitted to the frame during operation.

Ultimately, concerning the materials for manufacturing the damping device of the present invention, injection-molded plastic can be used for the lever arm, support arm, and secondary body. Preferably, the fixing element is made from a thermally conductive material, in particular metal, such that in combination with the frame and housing of the electrical household appliance, conventionally of metal, it can provide for the majority of the heat transfer by thermal conduction during operation. It is also envisioned that the lever arm and/or support arm would be of a thermally conductive material, in particular metal, for example shaped sheet steel, so as to be able to contribute to the heat transfer effect by thermal conduction during operation.

In conclusion, the present invention provides a damping device from the electrical household appliance oscillating unit that provides a damping coefficient that is continuously variable in an effective and precise manner over a wide range of values for the coefficient of friction. Moreover, as is shown in the present specification, the device presents other additional advantages and enables simplified construction and assembly of an electrical household appliance at reduced costs. It thereby entirely solves the technical problem described.

To complement the description of the invention with the aim of providing a better understanding of its technical characteristics, reference is made in the remainder of this descriptive report to the accompanying drawing, in which an embodiment of the invention is shown as a non-limiting practical example.

In said drawing:
Figure 1 shows a perspective view of a front-loading washing machine with the loading door open.
Figure 2 shows a front section along the line A-A in Figure 1, with a rotary damping device from the oscillating unit.
Figure 3 shows a detail view according to the front section of Figure 2 of the rotary damping device from the oscillating unit.
Figure 4 shows a detail view according to a cross section of section A-A Figure 1 of the rotary damping device from the oscillating unit.
Figure 5 shows a perspective view of the lever arm and secondary body from a first embodiment example of the rotary damping device.
Figure 6 shows a transverse elevational view of the embodiment example of the damping device from Figure 5.
Figure 7 shows a transverse elevational view of a second embodiment example of the damping device.
Figure 8 shows a transverse elevational view of a third embodiment example of the damping device.
Figure 9 shows a depiction of a front elevation of the lever arm and secondary body from the embodiment example from Figures 5 and 6 in which the angle of mechanical connection (δ) is depicted.
Figure 10 shows a schematic drawing in front elevation of the lever arm and secondary body from the embodiment example from Figures 5 and 6, in which is depicted the angle of mechanical connection (δ), together with the angle of the lever arm (α) and the angle of the secondary body (β) for each rotation direction of the lever arm.
Figure 11 shows a schematic drawing analogous to figure 10, but relating to a rotary damping device with two secondary bodies, specifically in the embodiment examples of figures 7 and 8.
Figure 12 shows a graphic application for the embodiment example of the damping device with two secondary bodies of figure 11, which schematically depicts the damping coefficient for the damping device on the y axis and the angle of the lever arm (α) on the x axis.
Figure 13 shows a transverse elevational view of a fourth embodiment example of the damping device, which differs from the embodiment examples illustrated in figures 5-8 in that each secondary body is arranged to interlock with the lever arm.
Figure 14 shows a transverse elevational view of a fifth embodiment example of the damping device. In this embodiment example, each secondary body is arranged to interlock with the lever arm and moreover the secondary bodies function to prevent rolling of the lever arm and to retain the friction element of the lever arm. By contrast with the embodiment examples shown in figures 5-8 and 13, the secondary rotational dampers comprise a frictional layer in place of a frictional element.

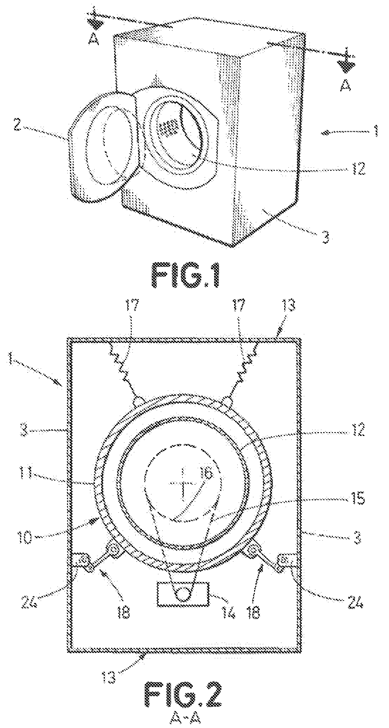

With reference firstly to Figure 1, this shows washing machine 1 that applies the rotary damping device of the present invention. Washing machine 1 is front loading, with front-loading door 2 for introducing or removing the laundry for washing in drum 12. Washing machine 1 comprises exterior housing 3. In Figure 2 can be seen a schematic layout of the damping system of oscillating unit 10 of washing machine 1. The damping system comprises at least one spring 17 and at least on rotary damping device 18. Oscillating unit 10 comprises tub 11, where is housed drum 12 that rotates by the action of motor 14 and transmission means for rotating drum 12 by motor 14, which includes fan belt 15 and belt pulley 16 functionally coupled to drum 12. In this layout for the damping system, oscillating unit 10 is coupled to frame 13 suspended by springs 17 and supported by means of rotary damping devices 18.

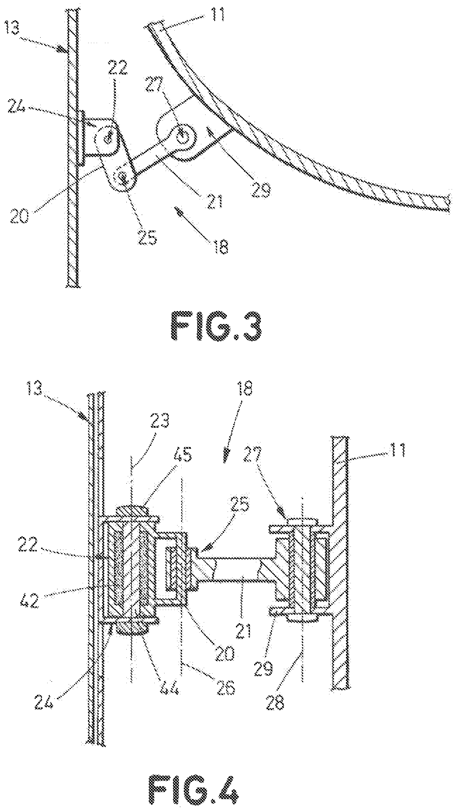

Figures 3 and 4 show in detail rotary damping device 18, as well as how it is arranged in washing machine 1. Rotary damping device 18 comprises lever arm 20 and support arm 21 articulated between each other by means of intermediate articulation 25. Intermediate articulation 25 comprises intermediate articulation axis 26 fixed, that is supportive, to support arm 21 or lever arm 20, such that lever arm 20 is articulated with respect to intermediate axis 26 fixed to support arm 21, or support arm 21 is articulated with respect to intermediate axis 26 fixed to lever arm 20, respectively. Rotary damping device 18 is arranged in washing machine 1 articulated to frame 13 and tub 11 by means of respective articulations from frame 22 and from oscillating unit 27. The articulations from frame 22 and from oscillating unit 27 comprise respective articulation axes 23 from the frame and 28 from the oscillating unit, with respect to which are articulated lever arm 20 and support arm 21, respectively. The articulation axes 23 from the frame and 28 from the oscillating unit are arranged respectively fixed to frame 13 and tub 11 of washing machine 1. The articulations from frame 22 and from oscillating unit 27 are fixed respectively to frame 13 and tub 11 by means of a fixing articulation from frame 24 and oscillating unit 27.

Rotary damping device 18 shown in Figures 3 and 4 incorporate a rotational friction damper in the articulation from frame 22. The rotational friction damper comprises friction element 42 fixed to lever arm 20 and functionally connected to fixing sleeve 44 from the fixing articulation from frame 24. The fixing articulation from frame 24 comprises fixing bolt 44 and two fixing tabs 46 fixed to frame 13 such that the fixing of fixing sleeve 43 to frame 13 is achieved by means of fixing bolt 44 passing through fixing sleeve 43 and provided with tightening means such as a nut.

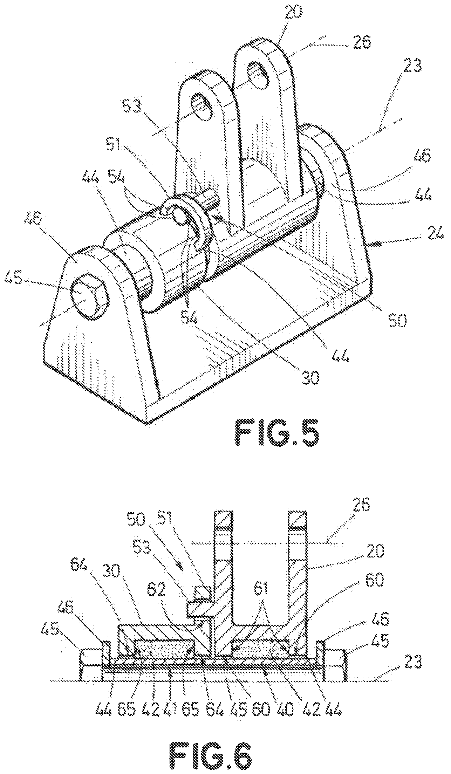

Figures 5 and 6 show a first embodiment example of the rotary damping device according to the present invention (support arm not shown). Rotary damping device 18 comprises lever arm 20 articulated with respect to a frame articulation axis 23 through principal rotational friction damper 40. The rotary damping device 18 comprises exactly one secondary body 30 articulated with respect to the same frame articulation axis 23, through secondary rotational friction damper 41, and arranged side by side adjacent to lever arm 20. Secondary body 30 is mechanically coupled to lever arm 20 by means of a mechanical pulling coupling to permit pulling in rotation of secondary body 30 by rotation of lever arm 20 about the frame articulation axis 23. The mechanical pulling coupling of the embodiment consists of mechanical pulling connection 50 between lever arm 20 and secondary body 30 (pushed). Mechanical pulling connection 50 comprises at least one pusher element consisting of pusher flange 53 fixed the lever arm 20 and at least one stop element consisting of stop tab 51 fixed to secondary body 30 (pushed) arranged such that by rotating lever arm 20 with respect to secondary body 30 (pushed), pusher flange 53 is movable with respect to stop tab 51 and in its interior with mechanical connection angle (δ), the pusher element interferes with the stop element at the extremes of the mechanical connection angle (δ). The interference between pusher flange 53 and stop tab 51 takes place by contact between interference surfaces 54 from within stop tab 51 and pusher flange 53. Principal (40) and secondary (41) rotational friction dampers comprise friction elements 42 respectively fixed to lever arm 20 and secondary body 30. Friction elements 42 are functionally connected to fixing sleeve 44 from the fixing frame articulation 23. For the fixing of fixing sleeve 44 to frame 13, the fixing frame articulation 23 includes two fixing tabs 46 fixed to frame 13 and fixing bolt 45 passing through fixing sleeve 44 and provided with tightening means such as a nut.

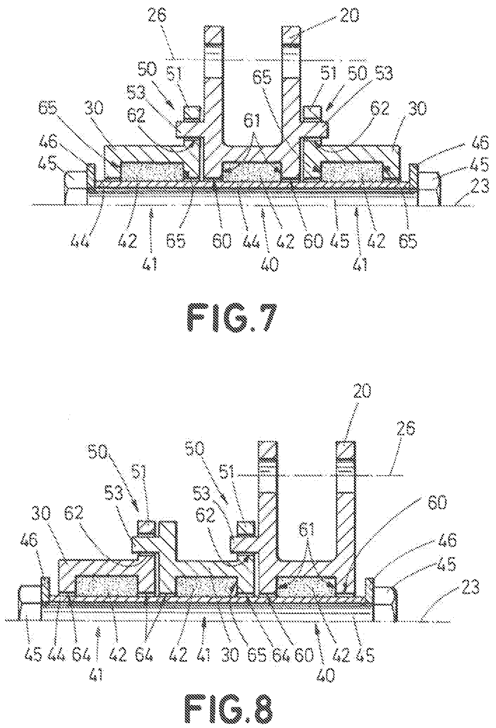

Figure 7 shows a second embodiment example of rotary damping device 18 (support arm not shown). This example differs from that shown in figures 5 and 6 in comprising exactly two secondary bodies 30 arranged one on each side of lever arm 20.

Figure 8 shows a third embodiment example of rotary damping device 18 (support arm not shown). This example differs from that shown in figures 7 and 8 in comprising exactly two secondary bodies 30 arranged on one side of lever arm 20.

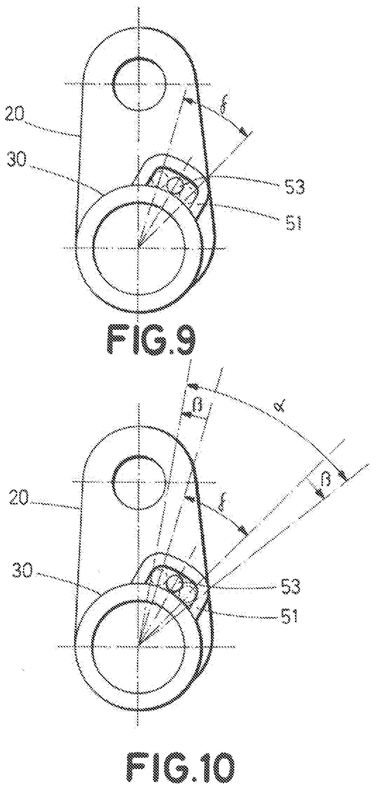

Figures 9 and 10 illustrate the functioning of rotary damping device 18 of the embodiment example from figures 5 and 6. Pusher flange 53 is movable with respect to stop tab 51 and inside within the mechanical connection angle (δ), the pusher element interferes with the stop element at the extremes of mechanical connection angle (δ). Pusher flange 53 is movable between the extreme positions (broken line) such that pusher flange 53 and stop tab 51 contact each other. Fixing a lever arm angle (α), the secondary body angle (β) for each rotation direction of the lever arm will be determined based on mechanical connection angle (δ).

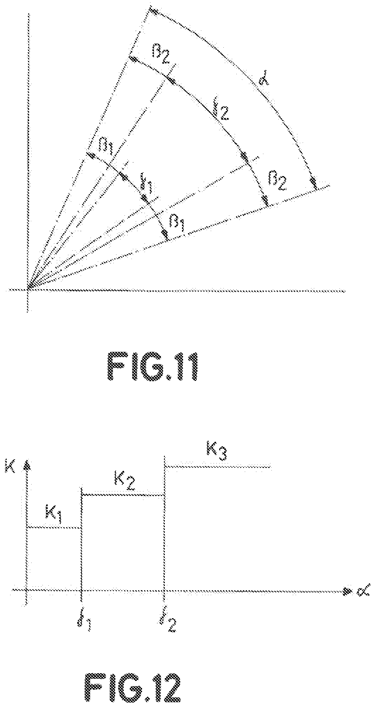

Figure 11 illustrates the functioning of rotary damping device 18 with two secondary bodies, in particular according to the embodiment examples in figures 7 and 8. Fixing a lever arm angle (α), the secondary body angle for each secondary body (β1, β2, respectively) for each rotation direction of the lever arm will be determined based on mechanical connection angle (δ1, δ2, respectively) from the two mechanical pulling connections 50 of the rotary damping device. In particular, in the embodiment example from figure 8, mechanical pulling connection 50 is farther away from lever arm 20, that is the mechanical pulling connection between secondary body 30 farther away and secondary body 30 closer will correspond to mechanical connection angle δ2, and the secondary body angle β2 will correspond to the secondary body 30 farther away from lever arm 20.

Figure 12 shows a graphic application for the embodiment example of the damping device with two secondary bodies corresponding to Figure 11. The graph represents the stepwise variation in the damping coefficient. If the lever arm angle is less than mechanical connection angle δ1, only the principal rotational damper will act such that the damping coefficient provided by the damping device is K1. If the lever arm angle (α) is greater than δ1 and less than δ2, the principal rotational damper and secondary rotational damper will act such that the damping coefficient provided by the damping device is K2. Finally, if the lever arm angle (α) is greater than δ2, the principal rotational damper and the two secondary rotational dampers will act such that the damping coefficient provided by the damping device is K3.

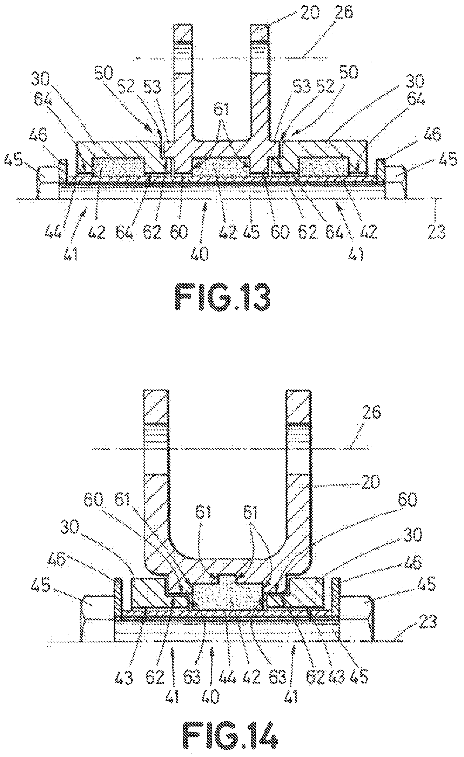

Figure 13 shows a fourth embodiment example of rotary damping device 18 (support arm not shown). This embodiment example differs from those shown in Figures 5 through 8 in that mechanical pulling connection 50 between secondary bodies 30 and lever arm 20 comprise at least one recess stop 52 of secondary body 30 or of lever arm 20 from connection 50 in functional correspondence with pusher flange 53 of lever arm 20 or of secondary body 30 from connection 50, respectively, such that the respective stop recesses 52 and pusher flanges 53 are engaged in connection 50.

Figure 14 shows a fifth embodiment example of rotary damping device 18 (support arm not shown). This embodiment example differs from that shown in Figure 13 in that secondary bodies 30 additionally have a function of retaining friction element 42 of principal rotary damping device 40, by means of retention element 63 comprising a surface of secondary body 30 for limiting the lateral movement of friction element 42. Secondary bodies 30 in this embodiment example comprise frictional layer 43, in particular a covering of the contact surface of the secondary body with fixing sleeve 44.

As is shown in the embodiment examples from Figures 5 to 8, 13, and 14, the present disclosure also contemplates the incorporation of element 61 for the retention of friction element 42 of rotary damping device 40 in the lever arm, or analogously the incorporation of element 65 for retention of the friction element from rotary damping device 41 in secondary body 30. Additionally, the present disclosure also contemplates the incorporation of lever arm anti-roll element 60 in the lever arm, which comprises a surface of lever arm 20 for limiting the roll or rotation about an axis substantially perpendicular to the frame articulation axis of 25. Analogously, secondary body 30 can incorporate anti-roll element 64 from secondary body 30 itself. Finally, it is also expected that secondary body 30 incorporates anti-roll element 62 from lever arm 20.

### List of Reference Symbols

- 1: Washing machine
- 2: Loading door
- 3: Housing
- 10: Oscillating unit
- 11: Tub
- 12: Drum
- 13: Frame
- 14: Motor
- 15: Fan belt
- 16: Belt pulley
- 17: Spring
- 18: Rotary damping device
- 20: Lever arm
- 21: Support arm
- 22: Frame articulation
- 23: Frame articulation axis
- 24: Frame articulation fastening
- 25: Intermediate articulation
- 26: Intermediate articulation axis
- 27: Oscillating unit articulation
- 28: Oscillating unit articulation axis
- 29: Oscillating unit articulation fastening
- 30: Secondary body
- 40: Principal rotational friction damper
- 41: Secondary rotational friction damper
- 42: Frictional element
- 43: Frictional layer
- 44: Fixing sleeve
- 45: Fixing bolt
- 46: Fixing tab
- 50: Mechanical pulling connection
- 51: Tab stop
- 52: Recess stop
- 53: Pusher flange
- 54: Interference surfaces
- 60: Lever arm anti-roll element
- 61: Lever arm retention element (from the friction element of the principal rotational damper)
- 62: Secondary body anti-roll element (lever arm)
- 63: Secondary body retention element (from the friction element of the principal rotational damper)
- 64: Secondary body anti-roll element (secondary body)
- 65: Secondary body retention element (from the friction element of the secondary rotational damper)
- δ: Mechanical connection angle
- α: Arm angle
- β: Secondary body angle
- K: Damping coefficient

## Claims

1. Rotational damping device (18) for an electrical household appliance, the device (18) comprising an arm (20, 21) articulated with respect to a principal articulation axis (23, 26, 28), and at least a secondary body (30), articulated with respect to a secondary articulation axis by means of a secondary rotational damper (41), the secondary body (30) being mechanically coupled with the arm (20, 21) by means of a mechanical coupling, **characterized in that** the mechanical coupling is a mechanical pulling coupling to allow to discontinuously pull, while rotating, the secondary body (30) around the secondary articulation axis by rotation of the arm (20, 21) around the principal articulation axis (23, 26, 28).

2. Rotational damping device according to claim 1, **characterized in that** the secondary articulation axis and the principal articulation axis (23, 26, 28) are the same articulation axis (23, 26, 28).

3. Rotational damping device (18) according to any of claims 1 and 2, **characterized in that** the mechanical pulling coupling comprises at least a mechanical pulling connection (50) between the arm (20, 21) and a pushed secondary body (30), or between a pushing secondary body (30) and a pushed secondary body (30), to allow to pull, while rotating, the pushed secondary body (30) around the secondary articulation axis by rotation of the arm (20, 21) around the principal articulation axis (23, 26, 28).

4. Rotational damping device (18) according to claim 3, **characterized in that** the mechanical pulling coupling (50) comprises at least a pushing element, fixed to the arm (20, 21) or to the pushing secondary body (30), and at least a stop element, fixed to the pushed secondary body (30), the pushing element and the stop element being arranged in such a way that, when the arm (20, 21) or the pushing secondary body (30) rotates in relation to the pushed secondary body (30), the pushing element is displaceable with respect to the stop element within a mechanical connection angle (δ), the pushing element interfering with the stop element at the ends of the mechanical connection angle (δ), in particular the pushing element and the stop element of the mechanical pulling connection (50) being selected from the group consisting of: a projection, a recess and a combination thereof.

5. Rotational damping device (18) according to claim 4, wherein the principal articulation axis (23, 26, 28) and the secondary articulation axis are the same articulation axis (23, 26, 28), **characterized in that** the arm (20, 21) and the secondary body (30) are arranged side by side to one another.

6. Rotational damping device (18) according to claim 5, **characterized in that** the mechanical connection angles (δ) of the respective mechanical pulling connections (50) of the device are different.

7. Rotational damping device (18) according to any of claims 5 and 6, **characterized in that** the mechanical connection angles (δ) of the respective mechanical pulling connections (50) of the device placed on one side or on both sides of the arm (20, 21) are bigger as the distance between the mechanical pulling connection (50) and the arm (20, 21) gets bigger.

8. Rotational damping device (18) according to any of claims 5 to 7, **characterized in** comprising exactly one secondary body (30) or two secondary bodies (30), in particular exactly two secondary bodies (30), each of them being arranged on either side of the arm (20, 21 ).

9. Rotational damping device (18) according to any of claims 5 to 8, **characterized in that** a secondary body (30) adjacent to the arm (20, 21) comprises an antioverturn element (60) of the arm (20, 21).

10. Rotational damping device (18) according to any of preceding claims, **characterized in that** the device (18) is articulated with respect to the principal articulation axis (23, 26, 28) by means of a principal rotational damper (40).

11. Rotational damping device (18) according to any of claims 1-10, **characterized in that** the device (18) is articulated with respect to the principal articulation axis (23, 26, 28) without the intermediacy of any principal rotational damper (40).

12. Rotational damping device (18) according to any of claims 10 and 11, **characterized in that** the principal and/or the secondary rotational damper (40, 41) is a rotational friction damper (40, 41).

13. Rotational damping (18) device according to claim 12, **characterized in that** the principal and/or rotational friction damper (40, 41) comprises at least a friction element (42) or a friction layer (43) and, in particular the friction element (42) being selected from the group consisting of: a friction bushing, a friction ring, a friction ribbon and a combination thereof.

14. Rotational damping device (18) according to claim 13, wherein the principal rotational damper (40, 41) is a rotational friction damper (40, 41) comprising a friction element (42), **characterized in that** a secondary body (30) adjacent to the arm (20, 21) comprises a retaining element (63) of the friction element (42) of the principal rotational friction damper (40, 41).

15. Electrical household appliance (1) comprising a housing (13) with which an oscillating group (10), in particular a tub (11), is coupled by means of at least one rotational damping device (18) as defined in any preceding claim.

16. Electrical household appliance (1) according to claim 15, wherein the principal articulation axis of the housing (23) and the principal articulation axis of the oscillating group (28) are fixed in relation to the housing (13) and the oscillating group (10) respectively.

17. Electrical household appliance (1) as defined in any of claims 15 and 16, which is embodied as a washing machine (1) or a laundry dryer (1).

## Patentansprüche

1. Rotationsdämpfvorrichtung (18) für ein elektrisches Haushaltsgerät, die einen in Bezug auf eine Hauptgelenkachse (23, 26, 28) gelenkigen Arm (20, 21) und mindestens einen sekundären Körper (30) umfasst, der anhand eines sekundären Rotationsdämpfers (41) in Bezug auf eine sekundäre Gelenkachse gelenkig ist, wobei der sekundäre Körper (30) anhand einer mechanischen Verbindung mechanisch mit dem Arm (20, 21) verbunden ist, **dadurch gekennzeichnet, dass** die mechanische Verbindung eine mechanische Zugverbindung ist, die während des Rotierens ein diskontinuierliches Ziehen des sekundären Körpers (30) um die sekundäre Gelenkachse durch Rotieren des Arms (20, 21) um die Hauptgelenkachse (23, 26, 28) ermöglicht.

2. Rotationsdämpfvorrichtung nach Anspruch 1, **dadurch gekennzeichnet, dass** es sich bei der sekundären Gelenkachse und der Hauptgelenkachse (23, 26, 28) um die gleiche Gelenkachse (23, 26, 28) handelt.

3. Rotationsdämpfvorrichtung (18) nach einem der Ansprüche 1 und 2, **dadurch gekennzeichnet, dass** die mechanische Zugverbindung zumindest eine mechanische Zugverbindung (50) zwischen dem Arm (20, 21) und einem geschobenen sekundären Körper (30) oder zwischen einem sekundären Schubkörper (30) und einem geschobenen sekundären Körper (30) umfasst, damit sich der geschobene sekundäre Körper (30) während des Rotierens durch Rotation des Arms (20, 21) um die Hauptgelenkachse (23, 26, 28) um die sekundäre Gelenkachse ziehen lässt.

4. Rotationsdämpfvorrichtung (18) nach Anspruch 3, **dadurch gekennzeichnet, dass** die mechanische Zugverbindung (50) zumindest ein an dem Arm (20, 21) oder dem sekundären Schubkörper (30) befestigtes Schubelement und zumindest ein an dem geschobenen sekundären Körper (30) befestigtes Stoppelement umfasst, wobei das Schubelement und das Stoppelement so angeordnet sind, dass sich das Schubelement, wenn der Arm (20, 21) oder der sekundäre Schubkörper (30) in Bezug zu dem geschobenen sekundären Körper (30) rotiert, in Bezug zu dem Stoppelement in einem mechanischen Verbindungswinkel (δ) verschieben lässt, wobei das Schubelement an den Enden des mechanischen Verbindungswinkels (δ) auf das Stoppelement trifft, wobei das Schubelement und das Stoppelement der mechanischen Zugverbindung (50) insbesondere aus der Gruppe ausgewählt sind, die aus Folgendem besteht: einem Vorsprung, einer Vertiefung und einer Kombination daraus.

5. Rotationsdämpfvorrichtung (18) nach Anspruch 4, bei der es sich bei der Hauptgelenkachse (23, 26, 28) und der sekundären Gelenkachse um die gleiche Gelenkachse (23, 26, 28) handelt, **dadurch gekennzeichnet, dass** der Arm (20, 21) und der sekundäre Körper (30) nebeneinander angeordnet sind.

6. Rotationsdämpfvorrichtung (18) nach Anspruch 5, **dadurch gekennzeichnet, dass** die mechanischen Verbindungswinkel (δ) der jeweiligen mechanischen Zugverbindungen (50) der Vorrichtung verschieden sind.

7. Rotationsdämpfvorrichtung (18) nach einem der Ansprüche 5 und 6, **dadurch gekennzeichnet, dass** die mechanischen Verbindungswinkel (δ) der jeweiligen mechanischen Zugverbindungen (50) der Vorrichtung auf einer Seite oder beiden Seiten des Arms (20, 21) umso größer werden, je mehr sich der Abstand zwischen der mechanischen Zugverbindung (50) und dem Arm (20, 21) vergrößert.

8. Rotationsdämpfvorrichtung (18) nach einem der Ansprüche 5 bis 7, **dadurch gekennzeichnet, dass** sie genau einen sekundären Körper (30) oder zwei sekundäre Körper (30), insbesondere genau zwei sekundäre Körper (30), umfasst, von denen jeder auf einer Seite des Arms (20, 21) angeordnet ist.

9. Rotationsdämpfvorrichtung (18) nach einem der Ansprüche 5 bis 8, **dadurch gekennzeichnet, dass** ein sekundärer Körper (30) neben dem Arm (20, 21) ein Überdrehschutzelement (60) für den Arm (20, 21) umfasst.

10. Rotationsdämpfvorrichtung (18) nach einem der vorhergehenden Ansprüche, **dadurch gekennzeichnet, dass** die Vorrichtung (18) in Bezug zu der Hauptgelenkachse (23, 26, 28) anhand eines Hauptrotationsdämpfers (40) gelenkig ist.

11. Rotationsdämpfvorrichtung (18) nach einem der Ansprüche 1 bis 10, **dadurch gekennzeichnet, dass** die Vorrichtung (18) in Bezug zu der Hauptgelenkachse (23, 26, 28) ohne einen dazwischenliegenden Hauptrotationsdämpfer (40) gelenkig ist.

12. Rotationsdämpfvorrichtung (18) nach einem der Ansprüche 10 und 11, **dadurch gekennzeichnet, dass** es sich bei dem Haupt- und/ oder dem sekundären Rotationsdämpfer (40, 41) um einen Rotationsreibungsdämpfer (40, 41) handelt.

13. Rotationsdämpfvorrichtung (18) nach Anspruch 12, **dadurch gekennzeichnet, dass** der Haupt- und/ oder der Rotationsreibungsdämpfer (40, 41) zumindest ein Reibelement (42) oder eine Reibschicht (43) umfasst und insbesondere das Reibelement (42) aus der Gruppe ausgewählt ist, die aus Folgendem besteht: einer Reibbuchse, einem Reibring, einem Reibband und einer Kombination daraus.

14. Rotationsdämpfvorrichtung (18) nach Anspruch 13, bei der es sich bei dem Hauptrotationsdämpfer (40, 41) um einen Rotationsreibungsdämpfer (40, 41) handelt, der ein Reibelement (42) umfasst, **dadurch gekennzeichnet, dass** ein sekundärer Körper (30) neben dem Arm (20, 21) ein Halteelement (63) des Reibelements (42) des Hauptrotationsreibungsdämpfers (40, 41) umfasst.

15. Elektrisches Haushaltsgerät (1) mit einem Gehäuse (13), mit dem eine Schwingbaugruppe (10), insbesondere ein Laugenbehälter (11), anhand mindestens einer Rotationsdämpfungsvorrichtung (18) nach einem der vorherigen Ansprüche verbunden ist.

16. Elektrisches Haushaltsgerät (1) nach Anspruch 15, bei dem die Hauptgelenkachse des Gehäuses (23) und die Hauptgelenkachse der Schwingbaugruppe (28) in Bezug zu dem Gehäuse (13) beziehungsweise der Schwingbaugruppe (10) fest sind.

17. Elektrisches Haushaltsgerät (1) nach einem der Ansprüche 15 und 16, das als Waschmaschine (1) oder Wäschetrockner (1) ausgeführt ist.

## Revendications

1. Dispositif amortisseur rotatif (18) pour un appareil ménager électrique, le dispositif (18) comprenant un bras (20, 21) articulé par rapport à un axe d'articulation principal (23, 26, 28), et au moins un corps secondaire (30) articulé par rapport à un axe d'articulation secondaire au moyen d'un amortisseur rotatif secondaire (41), le corps secondaire (30) étant couplé mécaniquement avec le bras (20, 21) au moyen d'un couplage mécanique, **caractérisé en ce que** le couplage mécanique est un couplage à traction mécanique afin de permettre de tirer de manière discontinue, pendant la rotation, le corps secondaire (30) autour de l'axe d'articulation secondaire grâce à une rotation du bras (20, 21) autour de l'axe d'articulation principal (23, 26, 28).

2. Dispositif amortisseur rotatif selon la revendication 1, **caractérisé en ce que** l'axe d'articulation secondaire et l'axe d'articulation principal (23, 26, 28) représentent le même axe d'articulation (23, 26, 28).

3. Dispositif amortisseur rotatif (18) selon l'une quelconque des revendications 1 et 2, **caractérisé en ce que** le couplage à traction mécanique comprend au moins un raccordement de traction mécanique (50) entre le bras (20, 21) et un corps secondaire (30) poussé, ou entre un corps secondaire (30) de poussée et un corps secondaire (30) poussé, afin de permettre de tirer, pendant la rotation, le corps secondaire (30) poussé autour de l'axe d'articulation secondaire grâce à une rotation du bras (20, 21) autour de l'axe d'articulation principal (23, 26, 28).

4. Dispositif amortisseur rotatif (18) selon la revendication 3, **caractérisé en ce que** le couplage à traction mécanique (50) comprend au moins un élément de poussée, fixé au bras (20, 21) ou au corps secondaire (30) de poussée, et au moins un élément d'arrêt, fixé au corps secondaire (30) poussé, l'élément de poussée et l'élément d'arrêt étant agencés de telle manière que, lorsque le bras (20, 21) ou le corps secondaire (30) de poussée tourne par rapport au corps secondaire (30) poussé, l'élément de poussée peut être déplacé par rapport à l'élément d'arrêt à l'intérieur d'un angle de raccordement mécanique (δ), l'élément de poussée interférant avec l'élément d'arrêt au niveau des extrémités de l'angle de raccordement mécanique (δ), en particulier l'élément de poussée et l'élément d'arrêt du raccordement de traction mécanique (50) étant sélectionnés parmi le groupe constitué de : une saillie, un renfoncement et une combinaison de ceux-ci.

5. Dispositif amortisseur rotatif (18) selon la revendication 4, dans lequel l'axe d'articulation principal (23, 26, 28) et l'axe d'articulation secondaire représentent le même axe d'articulation (23, 26, 28), **caractérisé en ce que** le bras (20, 21) et le corps secondaire (30) sont agencés côte à côte l'un de l'autre.

6. Dispositif amortisseur rotatif (18) selon la revendication 5, **caractérisé en ce que** les angles de raccordement mécanique (δ) des raccordements de traction mécanique (50) respectifs du dispositif sont différents.

7. Dispositif amortisseur rotatif (18) selon l'une quelconque des revendications 5 et 6, **caractérisé en ce que** les angles de raccordement mécanique (δ) des raccordements de traction mécanique (50) respectifs du dispositif placé sur un côté ou sur les deux côtés du bras (20, 21) deviennent plus grands à mesure que la distance entre le raccordement de traction mécanique (50) et le bras (20, 21) devient plus grande.

8. Dispositif amortisseur rotatif (18) selon l'une quelconque des revendications 5 à 7, **caractérisé en ce qu'**il comprend exactement un corps secondaire (30) ou deux corps secondaires (30), en particulier exactement deux corps secondaires (30), chacun d'entre eux étant agencé sur l'un des côtés du bras (20, 21).

9. Dispositif amortisseur rotatif (18) selon l'une quelconque des revendications 5 à 8, **caractérisé en ce qu'**un corps secondaire (30) adjacent au bras (20, 21) comprend un élément anti-renversement (60) du bras (20, 21).

10. Dispositif amortisseur rotatif (18) selon l'une quelconque des revendications précédentes, **caractérisé en ce que** le dispositif (18) est articulé par rapport à l'axe d'articulation principal (23, 26, 28) au moyen d'un amortisseur rotatif principal (40).

11. Dispositif amortisseur rotatif (18) selon l'une quelconque des revendications 1 à 10, **caractérisé en ce que** le dispositif (18) est articulé par rapport à l'axe d'articulation principal (23, 26, 28) sans l'intermédiaire d'un quelconque amortisseur rotatif principal (40).

12. Dispositif amortisseur rotatif (18) selon l'une quelconque des revendications 10 et 11, **caractérisé en ce que** l'amortisseur rotatif principal et/ou secondaire (40, 41) est un amortisseur à friction rotatif (40, 41).

13. Dispositif amortisseur rotatif (18) selon la revendication 12, **caractérisé en ce que** l'amortisseur principal et/ou à friction rotatif (40, 41) comprend au moins un élément de friction (42) ou une couche de friction (43), l'élément de friction (42) en particulier étant sélectionné parmi le groupe constitué de : une bague de friction, un anneau de friction, un ruban de friction et une combinaison de ceux-ci.

14. Dispositif amortisseur rotatif (18) selon la revendication 13, dans lequel l'amortisseur rotatif principal (40, 41) est un amortisseur à friction rotatif (40, 41) comprenant un élément de friction (42), **caractérisé en ce qu'**un corps secondaire (30) adjacent au bras (20, 21) comprend un élément de retenue (63) de l'élément de friction (42) de l'amortisseur à friction rotatif principal (40, 41).

15. Appareil ménager électrique (1) comprenant un carter (13) auquel est couplé un groupe oscillant (10), en particulier une cuve (11), au moyen d'au moins un dispositif amortisseur rotatif (18) selon l'une quelconque des revendications précédentes.

16. Appareil ménager électrique (1) selon la revendication 15, dans lequel l'axe d'articulation principal du carter (23) et l'axe d'articulation principal du groupe oscillant (28) sont fixes par rapport au carter (13) et au groupe oscillant (10), respectivement.

17. Appareil ménager électrique (1) selon l'une quelconque des revendications 15 et 16, qui est réalisé en tant que machine à laver (1) ou sèche-linge (1).
